# EUROPÄISCHE PATENTSCHRIFT

(11) **EP 0 802 305 B1**
(45) Veröffentlichungstag und Bekanntmachung des Hinweises auf die Patenterteilung: **31.05.2000**
(21) Anmeldenummer: 97103447.5
(22) Anmeldetag: 03.03.1997
(51) Int. Cl.: F01D 17/16, F01D 17/14

(54) **Abgasturbolader für eine Brennkraftmaschine**
Turbocharger for an internal combustion engine
Turbocompresseur d'un moteur à combustion interne

(30) Priorität: 18.04.1996 DE 19615237
(43) Veröffentlichungstag der Anmeldung: 22.10.1997
(73) Patentinhaber: DaimlerChrysler AG, 70567 Stuttgart (DE)
(72) Erfinder: Sumser, Siegfried, 70184 Stuttgart (DE); Hanauer, Horst, 71566 Althütte (DE); Schmidt, Erwin, 73666 Baltmannsweiler (DE); Finger, Helmut, 70771 Leinfelden-Echterdingen (DE); Erdmann, Wolfgang, 70439 Stuttgart (DE)

(56) Entgegenhaltungen:
- EP-A- 0 051 125
- EP-A- 0 678 657
- DE-C- 4 303 521
- DE-C- 4 330 487
- US-A- 4 776 168
- US-A- 5 025 629

## Beschreibung

Die Erfindung betrifft einen Abgasturbolader für eine Brennkraftmaschine gemäß den Oberbegriff des Patentanspruches 1.

Aus der DE 43 30 487 C1 ist bereits ein Abgasturbolader einer Brennkraftmaschine der gattungsgemäßen Art bekannt. Die Abgasturbine besitzt ein Laufrad mit einem radialen und einem halbaxialen Strömungseintrittsquerschnitt und einen das Laufrad umgebenden einflutigen Strömungskanal mit einem an die Strömungseintrittsquerschnitte des Laufrades mündenden ringdüsenförmigen Mündungsbereich mit einer Ringdüse je Strömungseintrittsquerschnitt. In dem Strömungskanal ist ein Leitgitter mit Leitschaufeln angeordnet, wobei der Durchflußquerschnitt mindestens einer der Ringdüsen einstellbar ist und wobei die beiden Ringdüsen in dem Strömungskanal durch einen strömungsgünstig konturierten Ring gebildet sind, der an einem in der radialen und der halbaxialen Ringdüse feststehendem Leitgitter befestigt ist.

Ein weiterer Abgasturbolader für eine Brennkraftmaschine ist aus der US 50 25 629 bekannt. Dieser Abgasturbolader besitzt einen zweiflutigen Strömungskanal, wobei der Strömungseintrittsquerschnitt einer Flut von einer koaxial zum Turbinenlaufrad angeordneten, in Längsrichtung verschieblichen Ringhülse versperrbar ist. In Sperrstellung der Ringhülse stößt die Ringhülsen-Stirnwand an eine Trennwand zwischen den beiden Fluten des Strömungskanals an; als Folge von Fertigungsungenauigkeiten und Maßtoleranzen können unerwünschte Fehlströme auftreten, wodurch insbesondere bei Verwendung des Abgasturboladers als Motorbremse der Wirkungsgrad der Turbine verschlechtert wird.

Zum allgemeinen Stand der Technik wird noch auf die Druckschriften DE-PS 42 32 400, DE-OS 38 33 906, DE-PS 34 41 115, DE-PS 34 27 715, DE-OS 28 43 202 und DD-PS 126 796 verwiesen.

Der Erfindung liegt die Aufgabe zugrunde, eine einflutige Abgasturbine derart auszubilden, daß besonders bei niederen Abgasmassendurchsätzen der Wirkungsgrad verbessert wird.

Diese Aufgabe wird erfindungsgemäß mit den Merkmalen des Anspruches 1 gelöst.

Ein Vorteil der Erfindung liegt darin, daß durch die erfindungsgemäße Ringhülse mit dem an der Stirnseite befestigten Leitschaufelkranz der Strömungseintrittsquerschnitt des Laufrades teilweise verriegelbar ist und daß besonders bei niederen Massendurchsätzen nur noch sehr geringe Falschanströmungsverluste am Laufradeintritt entstehen und zudem lediglich kleine Ablösezonen und damit kleine Verluste am Laufradaustritt auftreten, wodurch der Turbinenwirkungsgrad besonders in diesem Betriebsbereich wesentlich verbessert wird.

Desweiteren kann das einflutige Turbinengehäuse relativ groß ausgelegt werden, wodurch in dessen Strömungskanal niedrige Strömungsgeschwindigkeiten und somit geringere Strömungsverluste erreichbar sind. Die Strömungsbeschleunigung findet auf kurzen Lauflängen im jeweils offenen Leitgitter statt, wodurch sich in den Auslegungsstellungen der Leitgitter günstige Turbinenwirkungsgrade realisieren lassen. Das einflutige Turbinengehäuse kann als Spiralgehäuse oder als reiner Sammelraum gefertigt werden.

Durch die erfindungsgemäße Ausgestaltung nach Anspruch 2 wird das Instationär- und Verbrauchsverhalten des Motors weiter verbessert, indem der Strömungsquerschnitt einer Ringdüse durch die axial verschiebliche Ringhülse vollständig geschlossen wird.

Ein Vorteil der erfindungsgemäßen Ausgestaltung nach Anspruch 3 liegt darin, daß der Leitschaufelkranz auch bei durch die Ringhülse freigegebenem Strömungsquerschnitt in dem Konturring etwas eingetaucht bleibt, wodurch eine Verklemmung bei der Axialverschiebung des Leitschaufelkranzes nebst Ringhülse vermieden wird.

Durch die Ausgestaltung der Erfindung nach Anspruch 4 wird besonders bei niederen Massendurchsätzen das Instationär- und Verbrauchsverhalten des Motors weiter verbessert, indem der Strömungsquerschnitt der radialen Ringdüse durch die axial verschiebliche Ringhülse vollständig geschlossen wird. Die Halbaxialdüse wird dann mit dem entsprechend auf den unteren Betriebsbereich ausgelegten Leitgitter-Radschaufeleintrittsbereich alleine beaufschlagt.

Weitere Ausgestaltungen und Vorteile der Erfindung gehen aus den weiteren Unteransprüchen und der Beschreibung hervor.

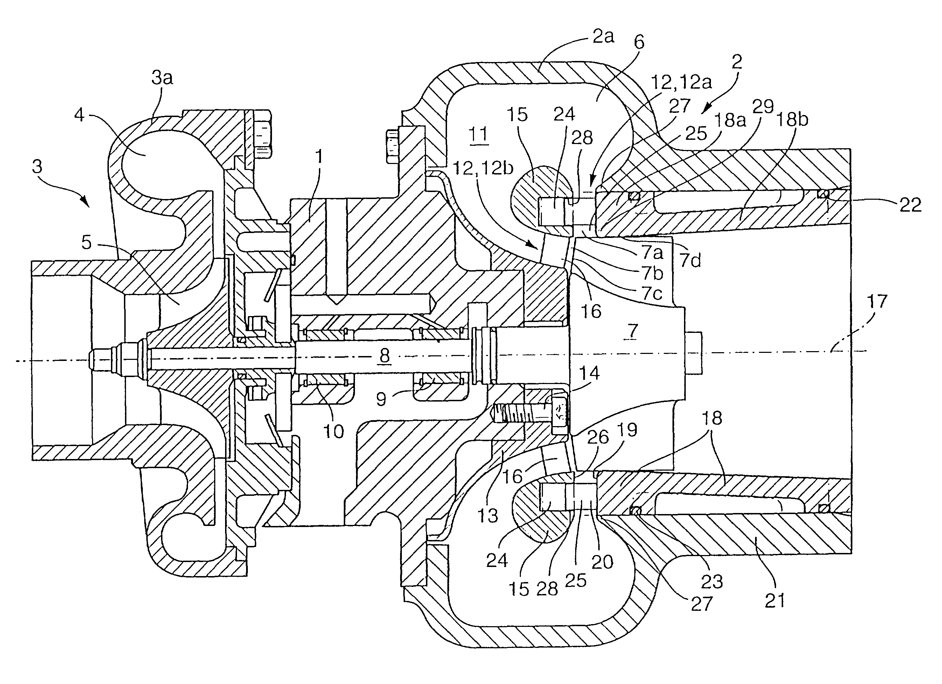

Die Zeichnung, in der die Erfindung anhand eines Ausführungsbeispiels näher erläutert ist, zeigt einen Meridianschnitt eines Abgasturboladers, der ein Gehäuse 1, eine Turbinenstufe 2 und eine Verdichterstufe 3 in prinzipiell bekannter Weise umfaßt.

In dem Gehäuse 1 ist ein einflutiges, spiralförmiges Verdichtergehäuse 3a mit Strömungskanal 4, der ein Radiallaufrad 5 der Verdichterstufe 3 umschließt, sowie ein einflutiges, spiralförmiges Turbinengehäuse 2a mit Strömungskanal 6, der ein radial und halbaxial durchströmtes Laufrad 7 der Turbinenstufe 2 umgibt, angeflanscht. Das Laufrad 7 besitzt einen radialen Strömungseintrittsquerschnitt 7a und einen halbaxialen Strömungseintrittsquerschnitt 7b.

Radiallaufrad 5 und Laufrad 7 sitzen auf einer gemeinsamen Welle 8, die mit Radiallagern 9 und 10 in dem Gehäuse 1 gelagert ist.

Der einflutige, spiralförmige Strömungskanal 6 umfaßt eine Flut 11, deren Abgasstrom das Laufrad 7 in einem ringdüsenförmigen Mündungsbereich 12 mit Ringdüsen 12a und 12b radial und halbaxial beaufschlagt.

Der Strömungskanal 6 besitzt an seiner dem Gehäuse 1 zugewandten Seite ein konusförmiges Konturelement 13, das am Gehäuse 1 mit Schrauben 14 befestigt ist und durch das die Welle 8 hindurchgeführt ist.

Der ringdüsenförmige Mündungsbereich 12 ist durch einen strömungsgünstig konturierten Ring 15 in die radiale Ringdüse 12a und in die halbaxiale Ringdüse 12b geteilt. Der Ring 15 wird durch ein am Konturelement 13 und am Ring 15 befestigtes feststehendes Leitgitter 16 getragen und besitzt eine bezüglich der Rotationsachse 17 des Laufrades 7 rotationssymmetrische Außenkontur. Besagtes Leitgitter 16 ist möglichst nahe zur laufradrückenseitigen Laufradperipherie 7c des Laufrades 7 angeordnet und besitzt einen sehr engen Leitgitterquerschnitt mit einer auf niedere bis mittlere Massendurchsätze optimierten Beschaufelung.

Zwischen Turbinengehäuse 2a und radialer Laufradperipherie 7d ist eine parallel zu einer Laufradlängsachse 17 verschiebliche Ringhülse 18 angeordnet, wobei an einer Stirnseite 19 der Ringhülse 18 ein Leitschaufelkranz 20, beispielsweise durch Reibschweißen, befestigt ist. Die Ringhülse 18 umfaßt einen zylinderringförmigen Abschnitt 18a, an dem der Leitschaufelkranz 20 befestigt ist und der mit geringem Spalt über das Laufrad 7 schiebbar ist sowie einen kegelringförmigen Abschnitt 18b, der sich als schlanker Diffusor an den Abschnitt 18a der Ringhülse 18 stromab des Laufrades 7 anschließt. Der Durchmesser des Abschnittes 18b erweitert sich also mit zunehmendem Abstand vom Laufrad 7. Eine an der der radialen Laufradperipherie 7d zugewandten Umlaufkante 29 der Ringhülse 18 entstehende gewisse Strömungsablösung wird durch den schlanken Diffusor 18b der Ringhülse 18 gering gehalten.

Die Ringhülse 18 ist in einem Auslaßstutzen 21 des Turbinengehäuses 2a geführt und ist mit zwei axial beabstandeten Dichtringen 22, 23 gegen den Strömungskanal 6 der Turbine 2 abgedichtet.

Der Leitschaufelkranz 20 ist mit der Ringhülse 18 in der radialen Ringdüse 12a parallel zur Laufradlängsachse 17 verschieblich, wobei der Leitschaufelkranz 20 in Leitschaufelkranzaufnahmen 24 des strömungsgünstig konturierten Rings 15 eintauchbar ist. Durch die Ringhülse 18 ist ein Durchflußquerschnitt 25 der radialen Ringdüse 12a einstellbar. Die Leitschaufelkranzaufnahme 24 im Ring 15 ist vorzugsweise als umlaufende Nut ausgebildet und der Leitschaufelkranz 20 stirnseitig mit einer Deckscheibe ausgestaltet.

Bei einer gewünschten Verriegelung des radialen Strömungseintrittsquerschnittes 7a des Laufrades 7, beispielsweise bei relativ geringem Abgasmassendurchsatz, wird die Ringhülse 18 soweit nach links geschoben, bis die Stirnseite 19 der Ringhülse 18 an dem strömungsgünstig konturierten Ring 15 in einem Anschlag 26 des Ringes 15 anschlägt (Position strichliert gezeichnet). Gleichzeitig ist in dieser Position der Ringhülse 18 der Leitschaufelkranz 20 vollständig in die Leitschaufelkranzaufnahme 24 des strömungsgünstig konturierten Ringes 15 eingetaucht und der radiale Strömungseintrittsquerschnitt 7a des Laufrades 7 ist bis auf Spaltströme vollständig verschlossen.

Wenn der Abgasmassendurchsatz steigt und eine Öffnung der radialen Strömungseintrittsquerschnittes 7a erwünscht ist, beispielsweise bei Vollast, wird die Ringhülse 18 in die in der Figur mit durchgezogenen Linien dargestellte Position nach rechts verschoben, sodaß die Stirnseite 19 der Ringhülse 18 bündig mit einer den engsten Strömungsquerschnitt zwischen Ring 15 und Turbinengehäuse 2a definierenden Nase 27 des Turbinengehäuses 2a abschließt. In dieser Position befindet sich lediglich der Leitschaufelkranz 20 in der radialen Ringdüse 12a, wobei der Leitschaufelkranz 20 und die Leitschaufelkranzaufnahme 24 so dimensioniert ist, daß in dieser Position der Ringhülse 18 ein Abschnitt 28 des Leitschaufelkranzes 20 in der Leitschaufelkranzaufnahme 24 des Ringes 15 eingetaucht bleibt, um ein Verklemmen der Ringhülse 15 nebst Leitschaufelkranz 20 zu verhindern.

In einer weiteren Ausführung der Erfindung, die nicht in der Zeichnung dargestellt ist, können die einzelnen Leitschaufeln des Leitschaufelkranzes 20 auch in separate, im strömungsgünstig konturierten Ring 15 eingebrachte Taschen eintauchbar sein, wobei zwischen den einzelnen Taschen Stege angeordnet sind.

## Patentansprüche

1. Abgasturbolader für eine Brennkraftmaschine, dessen Abgasturbine (2) ein Laufrad (7) mit mindestens einem radialen und einem halbaxialen Strömungseintrittsquerschnitt (7a, 7b) und einen das Laufrad (7) umgebenden einflutigen Strömungskanal (6) mit einem an die Strömungseintrittsquerschnitte (7a, 7b) des Laufrades (7) mündenden ringdüsenförmigen Mündungsbereich (12) mit mindestens einer Ringdüse (12a, 12b) je Strömungseintrittsquerschnitt (7a, 7b) umfaßt, mit mindestens einem in dem Strömungskanal (6) angeordneten Leitgitter (16) mit Leitschaufeln, wobei der Durchflußquerschnitt mindestens einer der Ringdüsen (12a, 12b) einstellbar ist und wobei die beiden Ringdüsen (12a, 12b) in dem Strömungskanal (6) durch einen strömungsgünstig konturierten Ring (15) gebildet sind, der an einem in der radialen und/oder der halbaxialen Ringdüse (12a, 12b) feststehendem Leitgitter (16) befestigt ist,
**dadurch gekennzeichnet,**
daß mindestens einer der beiden Strömungseintrittsquerschnitte (7a, 7b) des Laufrades (7) über eine in Richtung einer Laufradlängsachse (17) verschiebliche Ringhülse (18) mindestens teilweise verschließbar ist, wobei an einer Stirnseite (19) der Ringhülse (18) ein Leitschaufelkranz (20) befestigt ist, der in eine Leitschaufelkranzaufnahme (24) des strömungsgünstig konturierten Ringes (15) mindestens teilweise eintauchbar ist.

2. Abgasturbolader nach Anspruch 1,
**dadurch gekennzeichnet,**
daß eine Stirnseite (19) der Ringhülse (18) an dem strömungsgünstig konturierten Ring (15) anschlagbar ist und mindestens einen Strömungseintrittsquerschnitt (7a) des Laufrades (7) bis auf Spaltströme vollständig verschließt.

3. Abgasturbolader nach Anspruch 1 oder 2,
**dadurch gekennzeichnet,**
daß bei einem durch die Ringhülse (18) geöffnetem Strömungseintrittsquerschnitt (7a) der Leitschaufelkranz (20) in einem Abschnitt (28) in der Leitschaufelkranzaufnahme (24) des Ringes (15) eingetaucht bleibt.

4. Abgasturbolader nach einem der Ansprüche 1 bis 3,
**dadurch gekennzeichnet,**
daß bei niederem Abgasmassendurchsatz durch die Abgasturbine der radiale Mündungsbereich (12a) durch die verschiebliche Ringhülse (18) vollständig abgeriegelt wird.

5. Abgasturbolader nach einem der Ansprüche 1 bis 4,
**dadurch gekennzeichnet,**
daß der strömungsgünstig konturierte Ring (15) über ein in der halbaxialen Ringdüse (12b) feststehendes Leitgitter (16) fixierbar ist.

6. Abgasturbolader nach einem der Ansprüche 1 bis 5,
**dadurch gekennzeichnet,**
daß der strömungsgünstig konturierte Ring (15) eine bezüglich der Rotationsachse (17) des Laufrades (7) rotationssymmetrische Außenkontur aufweist.

7. Abgasturbolader nach einem der Ansprüche 1 bis 6,
**dadurch gekennzeichnet,**
daß die Ringhülse (18) stromab des Laufrades (7) als Diffusor (18b) ausgebildet ist.

## Claims

1. An exhaust turbocharger for an internal combustion engine, the exhaust turbine (2) of which has an impeller (7) having at least one radial and one semi-axial flow inlet cross section (7a, 7b) and a single-flow flow passage (6) surrounding the impeller (7) with an annular-nozzle shaped mouth region (12) opening onto the flow inlet cross sections (7a, 7b) of the impeller (7) with at least one ring nozzle (12a, 12b) for each flow inlet cross section (7a, 7b), at least one guide cascade (16) with guide vanes being arranged in the flow passage (6), the flow cross section of at least one of the ring nozzles (12a, 12b) being adjustable, the two ring nozzles (12a, 12b) in the flow passage (6) being formed by a flow-promoting profiled ring (15) which is fixed to a stationary guide cascade (16) in the radial and/or semi-axial ring nozzle (12a, 12b),
**characterised in that**
at least one of the two flow inlet cross sections (7a, 7b) of the impeller (7) can be at least partially shut off by means of an annular collar (18) slidable in the direction of an impeller longitudinal axis (17), a vane ring (20) being fixed to a front face (19) of the annular collar (18) which can be at least partially inserted in a vane ring seat (24) of the flow-promoting profiled ring (15).

2. An exhaust turbocharger as claimed in claim 1,
**characterised in that**
a front face (19) of the annular collar (18) can be applied against the flow-promoting profiled ring (15) and completely closes off at least one flow inlet cross section (7a) of the impeller (7) with the exception of flows through the gap.

3. An exhaust turbocharger as claimed in claim 1 or 2,
**characterised in that**
when the flow inlet cross section (7a) is opened by means of the annular collar (18), the vane ring (20) remains inserted in a portion (28) of the ring vane seat (24) of the ring (15).

4. An exhaust turbocharger as claimed in one of claims 1 to 3,
**characterised in that**
during low exhaust throughput through the exhaust turbine, the radial mouth region (12a) is completely closed off by means of the slidable annular collar (18).

5. An exhaust turbocharger as claimed in one of claims 1 to 4,
**characterised in that**
the flow-promoting profiled ring (15) can be secured by means of a stationary guide cascade (16) in the semi-axial ring nozzle (12b).

6. An exhaust turbocharger as claimed in one of claims 1 to 5,
**characterised in that**
the flow-promoting profiled ring (15) has an external contour which is symmetrical in rotation relative to the rotation axis (17) of the impeller (7).

7. An exhaust turbocharger as claimed in one of claims 1 to 6,
**characterised in that**
the annular collar (18) downstream of the impeller (7) is designed as a diffuser (18b).

## Revendications

1. Turbocompresseur d'un moteur à combustion interne dont la turbine à gaz d'échappement (2) comprend une roue mobile avec au moins des sections transversales de passage de l'écoulement (7a, 7b) radiale et semi-axiale et un canal d'écoulement (6) à un seul flux en tournant la roue mobile (7) avec au moins une zone d'embouchure (12) qui est en forme de tuyère annulaire, débouche aux sections transversales de passage de l'écoulement (7a, 7b) de la roue mobile (7) et présente au moins une tuyère annulaire (12a, 12b) par section transversale de passage de l'écoulement (7a, 7b), avec au moins une grille directrice (16) disposée dans le canal d'écoulement (6) et comportant des pales directrices, la section de passage du fluide étant ajustable au moins à l'une des tuyères annulaires (12a, 12b) et les deux tuyères annulaires (12a, 12b) étant formées dans le canal d'écoulement (6) par un anneau (15) profilé avantageusement pour l'écoulement qui est fixé sur une grille directrice (16) fixée dans la tuyère annulaire (12a, 12b) radiale et/ou semi-axiale, caractérisé en ce qu'au moins l'une des deux sections transversales de passage de l'écoulement (7a, 7b) de la roue mobile (7) peut être fermée au moins en partie par l'intermédiaire d'une douille annulaire (18) déplaçable dans le sens d'un axe longitudinal (17) de la roue mobile, et sur un côté frontal (19) de la douille annulaire (18) est fixée une couronne d'aubes directrices (20) qui peut être enfoncée au moins en partie dans un logement de la couronne d'aubes directrices (24) de l'anneau (15) profilé avantageusement pour l'écoulement.

2. Turbocompresseur selon la revendication 1, caractérisé en ce qu'un côté frontal (19) de la douille annulaire (18) peut être fixé sur l'anneau (15) profilé avantageusement pour l'écoulement et ferme entièrement au moins une section transversale de passage de l'écoulement (7a) de la roue mobile (7) jusqu'aux flux de fission.

3. Turbocompresseur selon la revendication 1 ou 2, caractérisé en ce que dans le cas d'une section transversale de passage de l'écoulement (7a) ouverte par la douille annulaire (18), la couronne d'aubes directrices (20) reste enfoncée dans une section (28) du logement de la couronne d'aubes directrices (24) de l'anneau (15).

4. Turbocompresseur selon l'une quelconque des revendications 1 à 3, caractérisé en ce que dans le cas d'un faible flux massique de gaz d'échappement par la turbine à gaz d'échappement, la zone radiale d'embouchure (12a) est verrouillée entièrement par la douille annulaire (18) déplaçable.

5. Turbocompresseur selon l'une quelconque des revendications 1 à 4, caractérisé en ce que l'anneau (15) profilé avantageusement pour l'écoulement peut être fixé par l'intermédiaire d'une grille conductrice (16) fixée dans la tuyère annulaire (12b) semi-axiale.

6. Turbocompresseur selon l'une quelconque des revendications 1 à 5, caractérisé en ce que l'anneau (15) profilé avantageusement pour l'écoulement présente un contour extérieur symétrique de rotation en ce qui concerne l'axe de rotation (17) de la roue mobile (7).

7. Turbocompresseur selon l'une quelconque des revendications 1 à 6, caractérisé en ce que la douille annulaire (18) est conçue comme diffuseur (18b), en aval de la roue mobile (7).
